# EUROPEAN PATENT APPLICATION

(11) **EP 4 725 656 A1**
(43) Date of publication of application: **15.04.2026**
(21) Application number: 24217953.9
(22) Date of filing: 06.12.2024
(51) Int. Cl.: B25J 9/16, B25J 9/08

(54) **METHOD OF ASSIGNING AND FIXING EACH OF LOGICAL CONNECTION SEQUENCE NUMBERS TO MULTIPLE CUBE DEVICES HAVING THE SAME GROUP NUMBER**

(30) Priority: 13.10.2024 KR 20240139050
(71) Applicant: Roborisen, Seoul (KR)
(72) Inventor: YIM, Sang-Bin, Gangnamgu, Seoul (KR)
(74) Representative: Cabinet Chaillot

(57) **Abstract**

Disclosed is a method of assigning and fixing a group number and a logical connection sequence number to each of cube devices when grouping the cube devices in constituting a modular robot by assembling a plurality of cube devices. More specifically, disclosed is a method of assigning and fixing a group number and a logical connection sequence number to a cube devicethroughan app of a smart device when connecting the cube device mounted on the modular robot and the smart device via Bluetooth, and connecting and driving the cube device according to the group number and the logical connection sequence number designated in the cube device when connecting a grouped cube device configured in the modular robot and the smart device via Bluetooth again.

## Description

### CROSS-REFERENCE TO RELATED APPLICATIONS

This application claims priority to and the benefit of Korean Patent Application No. 10-2024-0139050, filed on October13, 2024, the disclosure of which is incorporated herein by reference in its entirety.

### TECHNICAL FIELD

The present invention relates to a method ofassigning and fixing a group number and a logical connection sequence number to each ofcube devices when grouping cube devices in configuring a modular robot by assembling a plurality of cube devices.

More specifically, the present invention relates to a method of assigning and fixing a group number and a logical connection sequence number to a cube devicethrough an app of a smart device when connectingthe cube device mounted on a modular robotand a smart device via Bluetooth, and toa method of connecting and operating the cube device according to the group number andlogical connection sequence number assigned to the cube device when connecting the grouped cube devices configured on the modular robot and the smart device via Bluetooth.

### BACKGROUND

Recently, many robot-type toys that are popular among children and teenagers have been released. A toy robot refers to a robot as a toy capable of automatically performinga certain operation through power supply such as electricity.

Such robot toys are usually in a form of finished products, and most of them have typical and monotonous movements, and thusthere is a high possibility of losing interest easily.

Meanwhile, robot toys that may be assembled are being released to implement various appearances and movements, but for this,a block that performs only a specific function is essentially required, and thusa user needs all the blocks required for a corresponding robot in order to assemble various robots, and the user needs to purchase additional blocks in order to create a robot that has different functions or movements. Therefore, there are disadvantages of very high costs.

Accordingly, recently, a modular combination robot that enables complex forms and operations by combining a simple cube devicehavinga built-in Bluetooth communication function is combined in one module unit has been released.

However, as the currently released modular combination robot has variousforms, there is a disadvantage in that the modular combination robot may not be properly driven due to a lack of understanding of asequence in which each of cube devicesconstituting the modular combination robot is turned on when the robot is re-operated after assembly.

Accordingly, when operating the completed modular combination robot again, there is a need to provide a guideline for aconnection sequence of each of the cube devices constituting the modular combination robot.

### PRIOR ART LITERATURE

### [Patent Literature]

Patent Document 1: Korean Patent No.10-2069794 (Publication Date: January 23, 2020)
Patent Document 2:Korean Laid-open Patent Application No.10-2020-0059708 (Publication Date: May 29, 2020)
Patent Document 3: Korean Patent No.10-2337996 (Publication Date: December 10, 2021)
Patent Document 4: Korean Patent No.10-2238167 (Publication Date: April 12, 2021)

### SUMMARY

### Technical Problem

An object of the present invention is to provide a method of assigning and fixing a group number and a logical connection sequence number to a cube device through an app of a smart device when connecting the cube device and the smart device via Bluetooth in constituting a modular robot by assembling a plurality of cube devices.

In other words,an object of the present invention is to provide a method of connecting and driving each of cube devices according to the fixed group number and the logical connection sequence numberassigned and fixed to the cube device when connecting the grouped cube device and the smart device via Bluetooth when re-operating the modular robot constitutedbymounting the plurality of cube devices.

### Technical Solution

In order to achieve the above object, the present invention provides a method ofassigning and fixing each of logical connection sequence numbers to a plurality of cube devices having the same group number in a method of connecting each of cube devices of a modular robot on which a plurality of cube devices having built-in Bluetooth modulesare mounted and an app of a smart device, the method comprising: (A) assigning a group number to each of the cube devices through the app of the smart device when the plurality of cube devices to be grouped are in an ON state and storing the assigned group number in an internal flash memory of the cube device; (B) setting only cube devices to which an input group number is assigned to be paired with the app of the smart device when an arbitrary group number is input through the app of the smart device; (C)manufacturing a modular robot onwhich the cube device to which the input group number is assigned is mounted; (D) pairing each of the cube devices with the app of the smart device in a predetermined order according to a mounting position of each of the cube devices whenthe cube device mounted on the modular robot is in the ON state; (E)fixing a current connection sequence number of each of the cube devicesmounted on the modular robot by storing the connection sequence number of the paired cube device in the internal flash memory of the cube device by pressing a command button of each of the paired cube devices; and (F)operating the cube device according to the connection sequence number fixed to each of the cube devices regardless of a pairing sequence between each of the cube devices and the smart device when pairing with the app of the smart device by turning on the plurality of cube devices again which is mounted on the modular robot and has the fixed connection sequence number.

The step (A) includes:(A-1) changing the cube device to an On state when an external operation button of each of the plurality of cube devices is pressed; (A-2) inputting a group number to be assigned to the plurality of cube devices through an app of a smart device; (A-3) assigning the group number when the external operation button of each of the cube devices is re-pressed; and (A-4)storing the group number assigned to each of the cube devices in the internal flash memory of each of the cube devices.

In addition, in the step (A), the assigned group number may be configured to be displayed on a screen display partconfigured at the outside of the cube device.

In addition, in the step (A), the group number is configured to be a two-digit number by combining numbers 0 to 7, and to be set by combining two non-overlapping digits.

In addition, in the step (A), when each of the cube devices is turned on and is inthe ON state, the group number is configured to be displayed in the smart device in a format of PINGPONG. group number. AIR.

In addition, in the step (A), when the cube device to which the group number is assigned is in the ON state, a color to be matchedaccording to each number of the set group number is configured to blink repeatedly in an LED part for a time determined respectively according to a position of the number, so that the group number of the corresponding cube device is configured to be confirmed.

In addition, in the step (A), when the cube device to which the group number is assigned is in the ON state, a melody to be matched according to each number of the set group number is configured to be repeatedly generated through a buzzer for a time determined respectively according to the position of the number, so that the group number of the corresponding cube device is configured to be confirmed.

The step (D) includes: (D-1) pressing the external operation button of the cube device to which the input group number is assignedto convert to the ON state; and (D-2) pairing with the app of the smart device when pressing the external operation button of each of the cube devices once more in a predetermined order according to the mounting position of each of the cube deviceswhich arein the ON state.

In addition, in the step (D), when each of the cube devices is paired with theapp of the smart device, the plurality of cube devices are configured so that a specific color is lighted up in an external LED part according to the sequence in which each of the cube devices is connected to the smart device.

In addition, in the step (E), the connection sequence number of the cube device is stored in the internal flash memory of the cube device by pressing the command button of each of the cube devices mounted on and paired to the modular robotby linking with the app of the smart device so asto fix the connection sequence number of the current connection state of each of the cube devices connected to the modular robot.

In addition, in thestep (E), the command button may be configured by adding a connection sequence number fixing function to the external operation button of the cube device.

In the step (F), when the plurality of cube devices are paired with the smart device again,regardless of the pairing sequence of the cube device,the plurality of cube devices are configured so thata specific color fixed to the LED part is lighted up according to the connection sequence number stored in the internal flash memory of the cube device.

In addition,in the step (F), when each of the cube devices is turned on to be in the ON state, the group number is configured to be displayed on the connection screen of the smart device in the format of PINGPONG.group number.logical connection sequence number.AIR.

### Advantageous Effects

The present invention may achieve the following effects according to a method of fixing a logical connection sequence number of each of a plurality of cube devices having a same group number.

The present invention provides a method of assigning and fixing the group number and the logical connection sequence number to the cube device through an app of a smart device when connecting the cube device and the smart device via Bluetooth in constituting a modular robot by assembling the plurality of cube devices.

Through this, when re-operating the modular robot constituted by mounting the plurality of cube devices, each of the cube devices is connected and driven according to the fixed group number and the logical connection sequence number assigned and fixed to the cube device when connecting the grouped cube device and the smart device via Bluetooth, so that when re-operating the modular robot, it is possible to operate each initially set function of the plurality of cube devices mounted on the modular robot without being restricted by the pairing sequence of the plurality of cube devices

### BRIEF DESCRIPTION OF THE DRAWINGS

FIG. 1 is a viewshowing one cube device mounted on a modular robot according to an embodiment of the present invention.
FIG. 2 is a viewshowing a method of assigning group numbers to a plurality of cube devices according to an embodiment of the present invention.
FIG. 3 is a view showing a name of a cube deviceto which a group number is assigned by a connection screen of a smart device according to an embodiment of the present invention.
FIG. 4 is a view showing a method of confirming a group number assigned to a cube device assigned a group number according to an embodiment of the present invention.
FIG. 5 is a viewshowing a method of connecting to a cube device assigned a specific group number through an app installed on a smart device according to an embodiment of the present invention.
FIG. 6 is a view showing that only a cube devicehaving a specific group number is connected when the specific group number is input through the app installed on the smart device according to an embodiment of the present invention.
FIG. 7 is a view showing a color of anLED part of the cube device according to apairing sequence when the cube devicehavingthe specific group number is connected through the app installed on the smart device according to an embodiment of the present invention.
FIG. 8 and FIG. 9 are views showing a sequence of mounting a cube device to which the same group number is assigned according to an embodiment of the present invention on a modular robot.
FIG. 10 is a view showing a method of operating a modular robot on whichthe cube device to which the same group number is assigned according to an embodiment of the present invention is mounted.
FIG. 11 and FIG. 12 are views showing a sequence of mounting the cube device to which the same group number is assigned according to an embodiment of the present invention on the modular robot.
FIG. 13 is a view showing names of cube devicesin which a group number and a logical connection sequence numberis assigned on the connection screen of the smart device according to an embodiment of the present invention.

### DETAILED DESCRIPTION OF THE EMBODIMENTS

Hereinafter, a method of connecting only a specific group via Bluetoothby inserting a group number and connection sequence information into a name of a cube device of the present invention or determiningaconnection sequence of the cube device is described in detail with reference to the attached drawings.

The present invention includes a cube device100having a built-in Bluetooth module, and a plurality of cube devices are mounted and assembled to manufacture a modular robot 200.

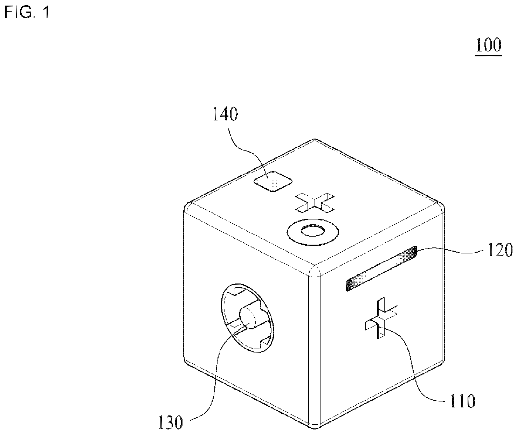

FIG. 1 is a viewshowing one cube device mounted on a modular robot according to an embodiment of the present invention.

As shown in the drawing, a connection groove 110, an LED part 120, a motor 130, an operation button 140, etc. are configured outside the cube device 100, and in addition, a Bluetooth module, a flash memory, buzzer, and a driving control part, etc. are configured to be built into the cube device 100.

While the cube device100 communicates with an external smart device, etc. through the built-in Bluetooth module and the driving control part (not shown) built into the cube device operates through anapp of the smart device, the motor 130, LED part 120, etc. which are linked to the driving control part are controlled.

In more detail, the driving control part built into the cube device100is operatedby an app or program installed on the smart device or PC when connected to the smart device or PC via Bluetooth.

The present invention relates to a method of connecting each of the cube devices of the modular robot 200on which the cube device100 is mounted to thesmart device, and more specifically, to a method ofassigning and fixing the logical connection sequence to the cube device 100 connected to the specific groupwhileforming the specific group by inserting the group number and the logical connection sequence number into the cube device100to connect the smart device.

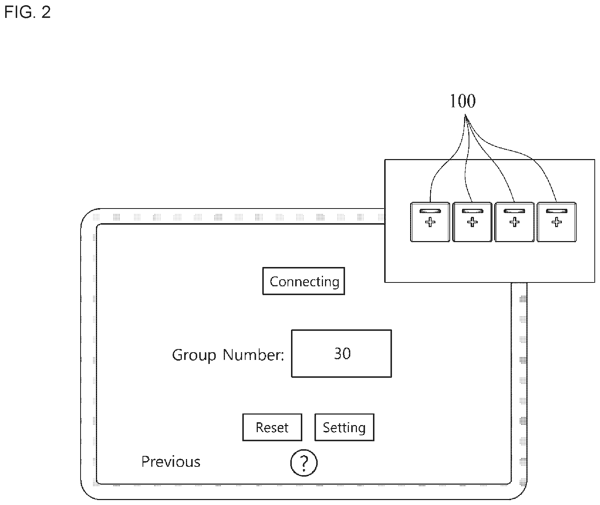

FIG. 2 isa viewshowing a method of assigning group numbers to a plurality of cube devices according to an embodiment of the present invention.

The cube device100 is configured to create a certain number of groups so that only cube devices having the same group number are driven through the app installed on the smart device, etc.

The app installed on the smart device is a dedicated app for the cube device100, for example,there is the Ping Pong Robot Group Wizard app developed by the company.

Grouping of cube devices is done by assigning a group number to each of the cube device100 through theapp of the smart device when the power of the plurality of cube devices 100 to be grouped is in an ON state, and the assigned group number is stored in the internal flash memory of the cube device through the driving control part. (S100)

Whendescribingthe step S100 in more detail, first, when the external operation button 140 of each of the plurality of cube devices is pressed, the cube device turns to the ON state.

In addition, the group number to be assigned to the plurality of cube devices 100 is input through the app installed on the smart device.

At this time, when the external operation button of each of the cube devices is re-pressed, the group number inputted through the app is assigned, and the group number assigned to each of the cube devices100 is stored in the internal flash memory of the cube device through each of the driving control parts.

In addition, the group numbers assigned to the plurality of cube devices through the stepS100 may be configured to be displayed on a screen display part (not shown) configured at the outside ofthe cube device.

In addition, the group number set in thestep S100 is configured to be a two-digit number by combining numbers 0 to 7, and to be set by combining two non-overlapping digits. However, number combinations such as 11, 22, 33, 44, 55, 66, and 77 will be prohibited from being usedfor preventing confusion in identification.

In addition, when each of the cube devices is in the ON state by pressing the external operation button of each of the cube devices to which the group number is assigned in the step S100, the group number is configured to be displayed on the Bluetooth connection screen of the smart device in a format of PINGPONG. group number. AIR.

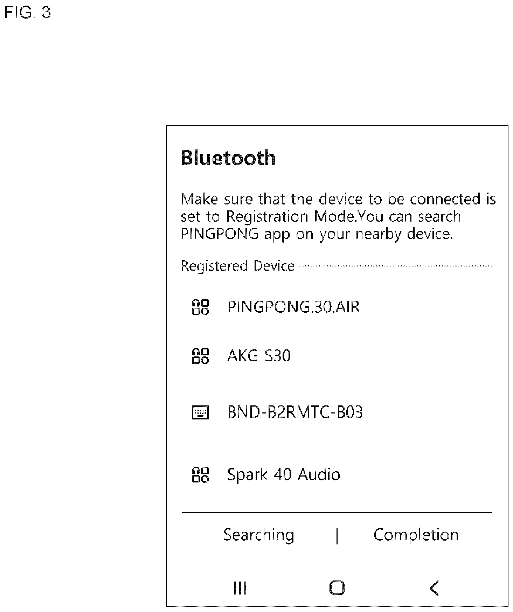

FIG. 3 isa view showing a name of a cube devicein which a group number is assigned toa smart device according to an embodiment of the present invention.

For example, when the group number is "25", the name of the cube device via Bluetooth will be displayed as PINGPONG.25.AIR. When the cube deviceis not assigned the group number, the group number is 0, the name of the cube devicevia Bluetooth will be displayed as PINGPONG.00.AIR.

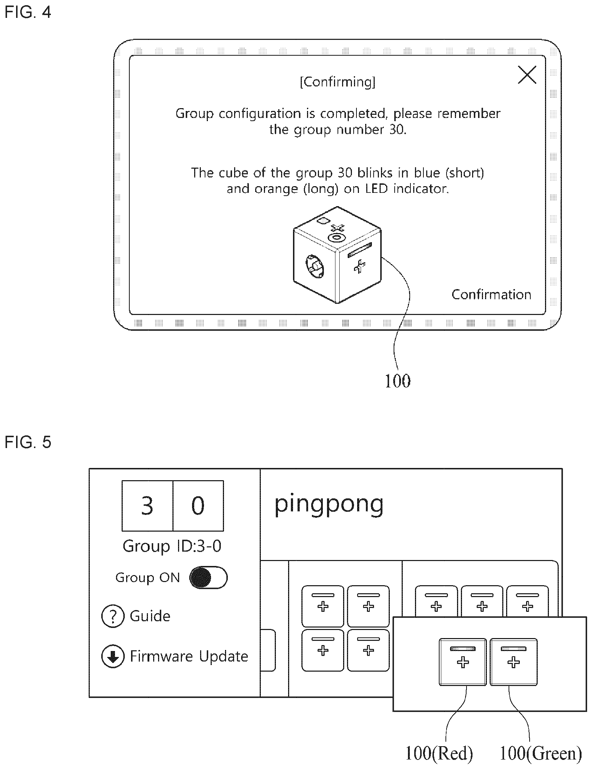

FIG. 4 is a view showing a method of confirming a group number assigned to a cube device assigned a group number according to an embodiment of the present invention.

In addition, when the cube device to which the group number is assigned is in the ON state in the step S100, a color to be matched according to each number of the set group number is configured to blink repeatedly for a time determined respectively according to a position of the number, so that the group number of the corresponding cube device is configured to be confirmed.

In addition, the group number assigned to each cube devicemay be checked through color lighting of the LED part when the cube device is turned on.

When the cube device is turned on in the ON state, color lighting is repeated infinitely with the first digit color for 0.5 seconds and the last digit color for 1 secondin the LED part outside the cube device.

For example, when the group number is 15, the color lighting is repeated infinitely with Green for 0.5 seconds and Yellow for 1 second, and the numbers 0 to 7 are matched with the colors R/G/B/C/M/Y/V/O respectively, which means R(Red)/G(Green)/B(Blue)/C(Cyan)/M(Magenta)/Y(Yellow)N(Violet)/O(Orange).

In addition, when the cube device to which the group number is assigned is in the ON state in the step S100, a melody to be matched according to each number of the set group number is configured to be repeatedly generated through a buzzer for a time determined respectively according to the position of the number, so that the group number of the corresponding cube device is configured to be confirmed.

That is, the group number assigned to each cube devicemay be confirmed through a melody soundof the buzzer when the cube is turned on. When the cube deviceto which the group number is assigned is turned on, the sound is repeated infinitely with the melody of the first digit for 0.5 seconds + the melody of the last digit for 0.5 seconds at the buzzer,

For example, when the group number of the cube device is 03, 0.5 seconds for Do and 0.5 seconds for Fa are repeated infinitely, and the numbers 0 to 7 are configured to be matched with low Doto high Do, respectively.

In addition, it may be distinguished by attaching a marking device (e.g., number sticker, etc.) to each cube deviceto which the group number is assigned.

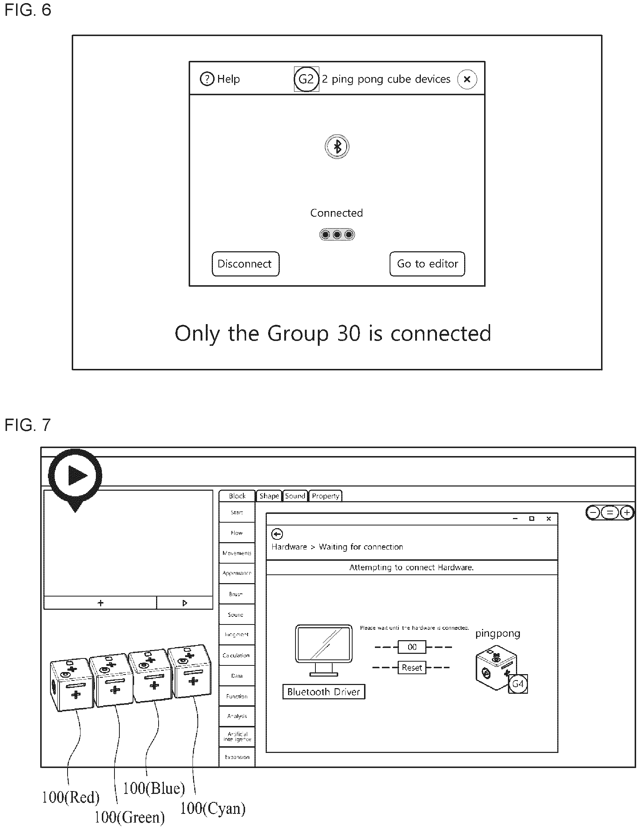

FIG. 5 is a view showing a method of connecting to a cube device assigned a specific group number through an app installed on a smart device according to an embodiment of the present invention. FIG. 6 is a view showing that only a cube device having a specific group number is connected when the specific group number is input through the app installed on the smart device according to an embodiment of the present invention.

Referring to the drawing, in the present invention, when an arbitrary group number is input through the app of the smart device, step S200 of setting so that only cube devices to which the input group number is assigned are paired is configured.

For example, when group number 30 is inputted through the app ofthe smart device, only a cube deviceto which the group number "30" is assigned is configured to be paired and connected with the smart device.

FIG. 7 is a view showing a color of an LED part of the cube device according to a pairing sequence when the cube device having the specific group number is connected through the app installed on the smart device according to an embodiment of the present invention.

When each of the cube devices is paired with the app ofthe smart device, the plurality of cube devices are configured so thata specific color is lighted up in the order of R/G/B/C/M/Y/V/O in the external LED part according to the sequence in which each of the cube devices is connected to the smart device.

For example, when there are three cube devices having the same group number, the first paired cube deviceis lighted up in red (R) in the LED part 120 and paired cube device is lighted up in green (G) in the LED part 120, and the third paired cube device is lighted up in blue (B) in the LED part120.

Hereinafter, a method of manufacturing a modular robot by mounting acube deviceto which a group number is assigned according to the present invention will be described.

First, a modular robot 200 on which a cube device to which a group number inputted to a smart device is assigned is mounted is manufactured, (S300)

The number of cube devices 100 mounted on the modular robot 200 may be two, three, and even up to 70.

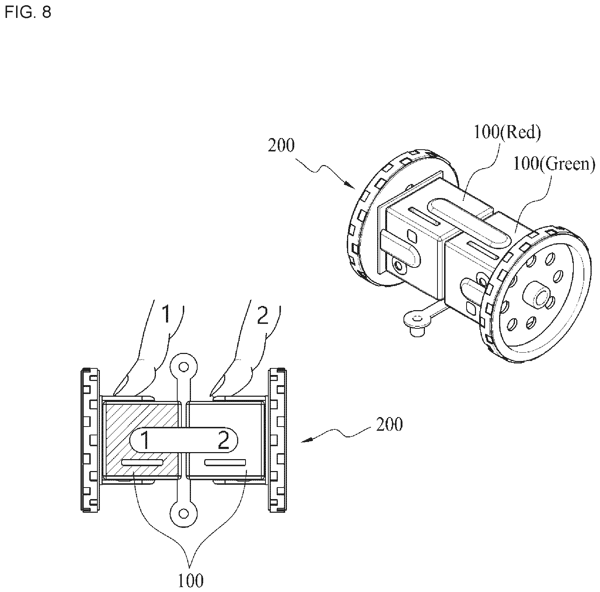

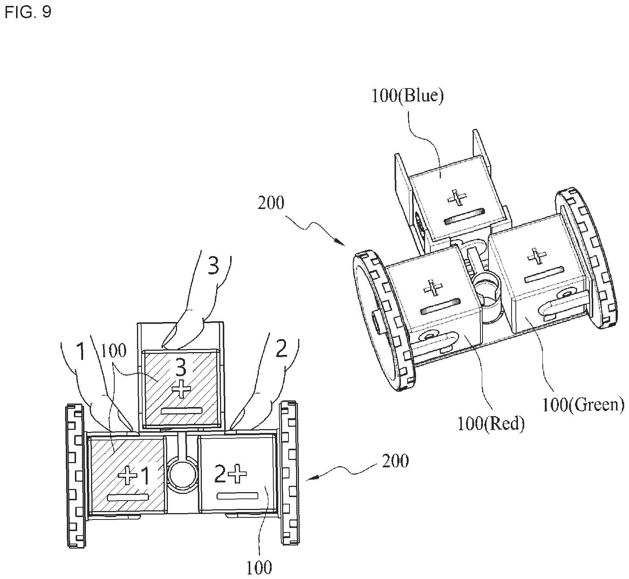

FIG. 8 and FIG. 9 are views showing a sequence of mounting a cube device to which the same group number is assigned according to an embodiment of the present invention on the modular robot.

When the assembly of the modular robot 200 is completed using the cube devices having the same group number,the cube devices mounted on the modular robot 200 are turned on to be in the ON state. That is, the external operation button 140 of each of the cube devices to which the input group number is assigned is pressed to be turned to the ON state.

The next important thing is to pair each of the cube devices with the app of the smart device in a predetermined order according to a mounting position of each of the cube devices. (S400)

That is, when the external operation button of each of the cube devices is re-pressed in a predetermined order according to the mounting position of each of the cube devices which are in the ON state, it is configured to pair with the app of the smart device.

When each of the cube devices is paired with theapp of the smart device,the plurality of cube devices are configured so that a specific color is lighted up in the external LED part according to the sequence in which each of the cube devices is connected to the smart device.

Referring to FIG. 8, when there are two cube devices having the same group number mounted on the modular robot, the cube device 100 to be first paired is a cube device mounted at position 1 of the modular robot 200, and the cube device mounted at position 1 should be paired with the smart device first, and when the cube device 100 is paired, it is lighted up in red (R) in the LED part 120.

Next, the cube device 100 to be second paired is a cube device mounted at position 2 of the modular robot 200,the cube device mounted at position 2 should be paired with the smart device next, and when the cube device is paired, it is lighted up in green (G) in the LED part 120.

Referring to FIG. 9, when there are three cube devices having the same group number mounted on the modular robot, the cube device 100 to be first paired is a cube device mounted at position 1 of the modular robot 200, and the cube device mounted at position 1 should be paired with the smart device first, and when the cube device 100 is paired, it is lighted up in red (R) in the LED part 120.

Next, the cube device 100 to be second paired is a cube device mounted at position 2 of the modular robot 200, the cube device mounted at position 2 should be paired with the smart device next, and when the cube device 100 is paired, it is lighted up in green (G) in the LED part 120.

Next, the cube device 100 to be third paired is a cube device mounted at position 3 of the modular robot 200, the cube device 100 mounted at position 3 should be paired with the smart device next, and when the cube device 100 is paired, it is lighted up in blue (B) in the LED part 120.

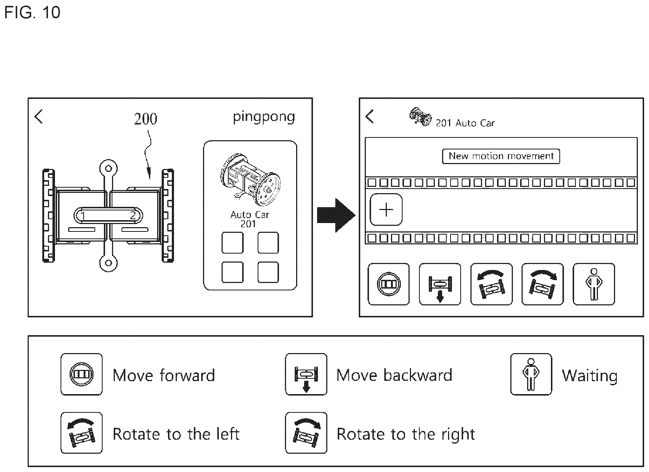

FIG. 10 is a view showing a method of operating a modular robot on which the cube device to which the same group number is assigned according to an embodiment of the present invention is mounted.

In order to drive a modular robot 200on whicha plurality of cube devices 100 having the same group number is mounted through an app of a smart device, it is necessary to perform pairing connection of the cube device 100 according to a mounting position of the modular robot 200 in the sequence.

In summary, when pairing the cube device100having the same group number mounted on the modular robot 200, the pairing should be performed in consideration of the sequence according to the mounting position, and thus the user should know a pairing connection sequence number of the cube device 100 according to the mounting position of the modular robot 200.

Therefore, even whenthe cube device100 is turned off and then turned on again to re-operate after completing the assembly of the modular robot 200, the pairing sequence of the cube device100 according to the mounting position of the modular robot 200should be known, and thus, when the modular robot 200 is assembled with 10 or more cube devices 100 having the same group number, considerable inconvenience and inefficiency are raised in re-operating the modular robot 200 by remembering all the connection sequence of the cube device100 or pairing them again while looking at a manual.

Accordingly, the present invention provides a method of assigning and fixing the group number and the logical connection sequence number to thecube device100 through the app of the smart device when connecting the cube device100 and the smart device via Bluetooth in constituting a modular robot by assembling the plurality of cube devices 100.

In the present invention, after assembling the plurality of cube devices 100 to constitutethe modular robot 200, the connection sequence number of the paired cube devices 100 is stored in the internal flash memory of the cube device through the driving control part by pressing the command button (not shown) of each of the cube devices 100 paired through the app of the smart device.

In other words, the connection sequence number of each of the cube devices100 currently assembled and connected to the modular robot 200 is fixed. (S500)

In the step S500, the command button (not shown) of each of the cube devices100 may be configured as a separate button,or may be configured by adding a connection sequence number fixing function to the external operation button 140 of the preceding cube device100.

That is, the step S500 is the fixing of the connection sequence number of the current connection state of each of the cube devices 100 mounted on the modular robot 200. by storing the connection sequence number of the cube device100 paired by pressing the command button of each of the cube devices 100 paired by linking with the app of the smart device in the internal flash memory of the cube device through the driving control part.

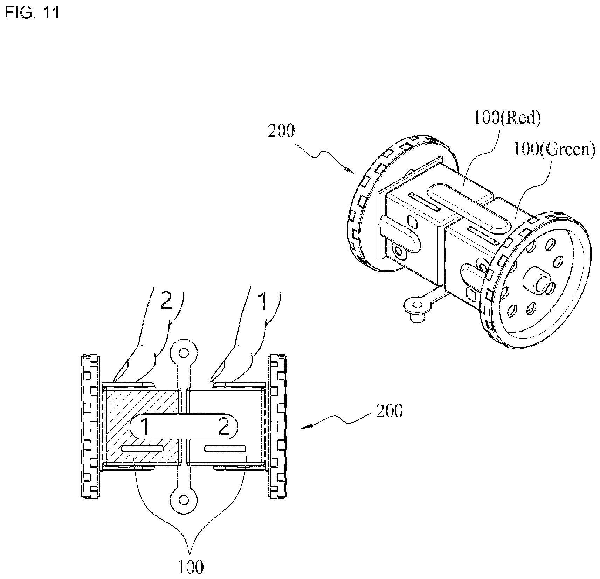

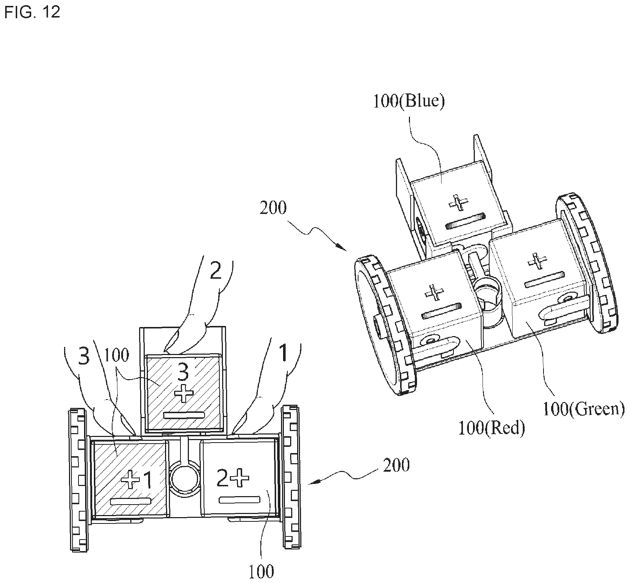

FIG. 11 and FIG. 12 are views showing a sequence of mounting the cube device to which the same group number is assigned according to an embodiment of the present invention on the modular robot.

Referring to the drawing, according to the present invention,when pairing with the app of the smart device by turning off the plurality of cube devices which is mounted on the modular robot and has the fixed connection sequence number and converting to the ON state again, the cube device100 operates according to the connection sequence number fixed to each of the cube devices100 regardless of a pairing sequence between each of the cube devices 100 and the smart device. (S600)

In other words, by fixing the connection sequence number of the current connection state of each of the cube devices100 assembled and mounted on the modular robot 200 to the logical connection sequence number, when the plurality of cube devices 100 mounted on the modular robot 200 are turned on again in order to re-operate the modular robot 200 and linked with the app of the smart device, each of the cube devices100 functions according to the fixed connection sequence number regardless of the pairing sequence of each of the cube devices100.

In addition, in the step S600, when the plurality of cube devices 100 are turned OFF and then converted to the ON state again and paired with the smart device again,the plurality of cube devices 100 are configured so thata specific color fixed to the LED part 120 is lighted up according to the connection sequence number stored in the internal flash memory of the cube device100 regardless of the pairing sequence between the cube device100 and the app of the smart device.

Referring to FIG. 10, even when the cube device100 mounted at position 2 of the modular robot 200 is paired with the smart device for the first time, the LED part lights up in green (G) instead of red (R), and the color is lighted up according to the logical connection sequence number stored in the internal flash memory of the cube device100.

Likewise, referring to FIG. 11, even when the cube device100 mounted at position 3 of the modular robot 200 is paired with the smart device for the second time, the LED part lights up in blue (B) instead of green (G), and the color is lighted up according to the logical connection sequence number stored in the internal flash memory of the cube device100.

Through this, when re-operatingthe modular robot 200 configured by mounting the plurality of cube devices 100, each of the cube devices 100 is connected and driven according to the fixed group number and the logical connection sequence number assigned and fixed to the cube device100 when connecting the grouped cube device100 and the smart device via Bluetooth,so that when re-operatingthe modular robot 200, it is possible to operate each initially set function of the plurality of cube devices 100 mounted on the modular robot 200without being restricted by the pairing sequence of the plurality of cube devices100.

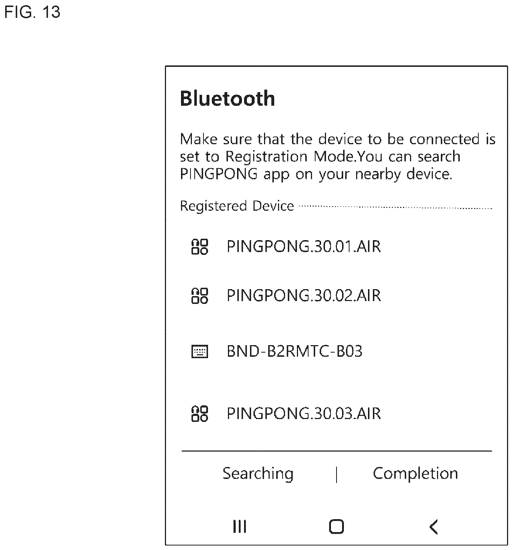

FIG. 13 is a view showing names of cube devices in which a group number and a logical connection sequence numberis assigned on the connection screen of the smart device according to an embodiment of the present invention.

In the step S600, when each of the cube devices is turned on to be in the ON state, the group number is configured to be displayed on the connection screen of the smart device in the format of PINGPONG. group number. logical connection sequence number. AIR.

Although the preferred embodiments of the present invention have been described in detail above, the scope of the present invention is not limited thereto, and various modifications and improvements made by those skilled in the art using the basic concept of the present invention defined in the following claims also fall within the scope of the present invention.

### DESCRIPTION OF REFERENCE NUMERALS

100: Cube device110: Connection groove
120: LED part 130: Motor
140: Operation button200: Modular Robot

## Claims

1. A method ofassigning and fixing each of logical connection sequence numbers to a plurality of cube deviceshaving the same group number in a method ofconnecting each of cube devices of a modular robot on which the plurality of cube devices having built-in Bluetooth modules are mounted and an app of a smart device, the method comprising:
(A) assigning a group number to each of the cube devices(100) through the appof the smart device when the plurality of cube devices(100) to be grouped are in an ON state and storing the assigned group number in an internal flash memory of the cube device(100);
(B) setting only cube devices(100) to which an input group number is assigned to be paired with the app of the smart device when an arbitrary group number is input through the app of the smart device;
(C) manufacturing a modular robot(200) on which the cube device(100) to which the input group number is assignedis mounted;
(D) pairing each of the cube devices(100) with the app of the smart device in a predetermined order according to a mounting position of each of the cube devices(100) whenthe cube device(100) mounted on the modular robot(200) is in the ON state;
(E) fixing a current connection sequence number of each of the cube devices(100)mounted on the modular robot(200) by storing the connection sequence number of the paired cube device(100) in the internal flash memory of the cube device(100) by pressing a command button of each of the paired cube devices(100); and
(F) operating the cube device(100) according to the connection sequence numberfixed to each of the cube devices(100) regardless of a pairing sequence between each of the cube devices(100) and the smart device when pairing with the app of the smart deviceby turning on the plurality of cube devices(100)again which is mounted on the modular robot(200) and has the fixed connection sequence number.

2. The method of claim 1, wherein the step (A) includes: (A-1) changing the cube device(100) to be in the On state when an external operation button(140) of each of the plurality of cube devices(100) is pressed; (A-2) inputting a group number to be assigned to the plurality of cube devices(100) through an app of a smart device; (A-3) assigning the group number when the external operation button(140) of each of the cube devices(100) is re-pressed; and (A-4) storing the group number assigned to each of the cube devices(100) in the internal flash memory of each of the cube devices(100).

3. The method of claim 1, wherein, in the step (A), the assigned group number is configured to be displayed on a screen display part configured at the outside of the cube device(100).

4. The method of claim 1, wherein, in the step (A), the group number is configured to be a two-digit number by combining numbers 0 to 7, and to be set by combining two non-overlapping digits.

5. The method of claim 1, wherein, in the step (A), when each of the cube devices(100) is turned on and is in the ON state, the group number is configured to be displayed in the smart device in a format of PINGPONG. group number. AIR.

6. The method of claim 1, wherein, in the step (A), when the cube device(100) to which the group number is assigned in the ON state, a color to be matched according to each number of the set group number is configured to blink repeatedly in an LED part(120) for a time determined respectively according to a position of the number, so that the group number of the corresponding cube device(100) is configured to be confirmed.

7. The method of claim 1, wherein, in the step (A), when the cube device(100) to which the group number is assigned is in the ON state, a melody to be matched according to each number of the set group number is configured to be repeatedly generated through a buzzer for a time determined respectively according to the position of the number, so that the group number of the corresponding cube device(100) is configured to be confirmed.

8. The method of claim 1, wherein the step (D) includes: (D-1) pressing the external operation button(140) of the cube device(100) to which the input group number is assignedto convert to the ON state; and (D-2) pairing with the app of the smart device when pressing the external operation button(140)of each of the cube devices(100) once more in a predetermined order according to the mounting position of each of the cube devices(100) which are in the ON state.

9. The method of claim 8, wherein, in the step (D), when each of the cube devices (100)is paired with the app of the smart device, the plurality of cube devices(100) are configured so that a specific color is lighted up in an external LED part(120) according to the sequence in which each of the cube devices(100) is connected to the smart device.

10. The method of claim 1, wherein, in the step (E), the connection sequence number of the cube device(100) is stored in the internal flash memory of the cube device(100) by pressing the command button of each of the cube devices(100) mounted on and paired to the modular robot(200) by linking with the app of the smart device so as to fix the connection sequence number of the current connection state of each of the cube devices(100) connected to the modular robot(200).

11. The method of claim 10, wherein, in the step (E), the command button is configured by adding a connection sequence number fixing function to the external operation button of the cube device(100).

12. The method of claim 1, wherein, in the step (E), when the plurality of cube devices(100) are paired with the smart device again, regardless of the pairing sequence of the cube device(100), the plurality of cube devices(100) are configured so that a specific color fixed to the LED part(120) is lighted up according to the connection sequence number stored in the internal flash memory of the cube device(100).

13. The method of claim 1, wherein, in the step (F), when each of the cube devices(100) is turned on to be in the ON state, the group number is configured to be displayed on the connection screen of the smart device in the format of PINGPONG. group number. logical connection sequence number. AIR.
